(19) Europäisches Patentamt / European Patent Office / Office européen des brevets

(11) **EP 2 992 117 B1**

(12) **EUROPÄISCHE PATENTSCHRIFT**

(45) Veröffentlichungstag und Bekanntmachung des Hinweises auf die Patenterteilung:
**31.05.2017** **Patentblatt 2017/22**

(21) Anmeldenummer: **14718355.2**

(22) Anmeldetag: **04.04.2014**

(51) Int Cl.:
*C21D 9/56* *(2006.01)*     *B21B 37/16* *(2006.01)*
*B21B 37/74* *(2006.01)*     *B21B 37/76* *(2006.01)*
*C21D 11/00* *(2006.01)*     *C21D 1/54* *(2006.01)*
*G05D 23/00* *(2006.01)*     *G05D 5/00* *(2006.01)*
*C21D 8/02* *(2006.01)*

(86) Internationale Anmeldenummer:
**PCT/EP2014/056779**

(87) Internationale Veröffentlichungsnummer:
**WO 2014/177341 (06.11.2014 Gazette 2014/45)**

(54) **BESTIMMUNG DES FERRITISCHEN PHASENANTEILS NACH DEM ERWÄRMEN ODER ABKÜHLEN EINES STAHLBANDS**

DETERMINING THE FERRITE PHASE FRACTION AFTER HEATING OR COOLING OF A STEEL STRIP

DÉTERMINATION DE LA PROPORTION DE PHASE FERRITIQUE APRÈS AVOIR CHAUFFÉ OU REFROIDI UN FEUILLARD D'ACIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2013 AT 3712013**
**26.09.2013 AT 506202013**

(43) Veröffentlichungstag der Anmeldung:
**09.03.2016 Patentblatt 2016/10**

(73) Patentinhaber: **Primetals Technologies Austria GmbH**
**4031 Linz (AT)**

(72) Erfinder:
• **LINZER, Bernd**
**A-4621 Sipachzell (AT)**
• **RIMNAC, Axel**
**A-4020 Linz (AT)**
• **BURGER, Rainer**
**90491 Nuernberg (DE)**
• **LINSBOD, Robert**
**A-4020 Linz (AT)**
• **MIKOTA, Josef**
**A-4210 Gallneukirchen (AT)**

(74) Vertreter: **Metals@Linz**
**Primetals Technologies Austria GmbH**
**Intellectual Property Upstream IP UP**
**Turmstraße 44**
**4031 Linz (AT)**

(56) Entgegenhaltungen:
WO-A1-2004/042480    DE-A1- 19 941 736
JP-A- S59 129 717    US-A1- 2007 151 635
US-A1- 2008 135 137    US-A1- 2010 131 092
US-A1- 2010 219 567    US-B2- 6 679 626

**Beschreibung**

Gebiet der Technik

Die vorliegende Erfindung betrifft ein Verfahren und ein Computerprogrammprodukt zur Bestimmung des ferritischen Phasenanteils $x_\alpha$ nach dem Erwärmen oder Abkühlen eines Stahlbands in einer metallurgischen Anlage, wie einer Glühe oder einer Kühlstrecke. Außerdem betrifft die Erfindung eine Vorrichtung zur Durchführung des Verfahrens.

Stand der Technik

Nach dem Stand der Technik ist es bekannt, die Phasenanteile in einem Stahlband über das sogenannte Barkhausen-Rauschen oder die Messung der magnetischen Hysterese zu bestimmen. Außerdem ist es bekannt, die Phasenanteile in einem Stahlband durch eine sog. *post-mortem* Analyse zu bestimmen, umfassend die Schritte Probennahme, Probenaufbereitung und eine metallkundliche Analyse der aufbereiteten Probe. Durch die *post-mortem* Analyse kann indirekt (d.h. über das Gefüge) auf die in einer Kühl- oder Heizstrecke vorhandenen Prozessbedingungen rückgeschlossen werden.

Nachteilig an der Messung des Barkhausen-Rauschens oder der Messung der magnetischen Hysterese ist, dass der Messkopf sehr nahe an das Band herangeführt werden muss. Außerdem sind dazu zusätzliche Messgeräte notwendig, die in einer metallurgischen Anlage oftmals nicht vorhanden sind. Dadurch entsteht ein beträchtlicher apparativer und personeller Mehraufwand.

Nachteilig an der *post-mortem* Analyse ist, dass erst längere Zeit nachdem die Herstellung des Stahlbands abgeschlossen ist, auf das Erreichen der geforderten Eigenschaften des ausgebildeten Gefüges rückgeschlossen werden kann. Durch die lange Zeitverzögerung bei der *post-mortem* Analyse kann sie für den geregelten Ausgleich transienter Bedingungen bei der Herstellung des Stahlbands - z.B. bei einer Verlangsamung der Gießgeschwindigkeit aufgrund eines Pfannenwechsels, die bei einer Gieß-Walz-Verbundanlage mit einer Reduktion der Durchlaufgeschwindigkeit des Stahlbands durch eine Kühlstrecke einhergeht - nicht eingesetzt werden.

Aus der US 6,679,626 B2 ist ein Verfahren zur Ermittlung der thermischen Materialeigenschaften vom Metall Formteilen bekannt. Dazu wird ein Modell verwendet, das die thermischen Materialeigenschaften des Metall-Formteils beschreibt, wobei wenigstens ein thermodynamischer Parameter als Linearkombination aus wenigstens einer Basisfunktion und wenigstens einem Gewichtungsfaktor gebildet wird.

Aus der US 2008/135137 A1 ist ein Verfahren zum Abkühlen von Stahlplatten bekannt. Dazu wird die Endtemperatur beim Abkühlen geregelt eingestellt, in dem die Enthalpiewerte der austenitischen und ferritischen Phasenanteile bei gewissen Temperaturen sowie eine sogenannte dynamische Enthalpie bestimmt werden. Die Endtemperatur wird über den temperaturabhängigen Gradienten der dynamische Enthalpie vorausberechnet.

Schließlich ist aus der WO 2004/042480 A1 ein Modellierverfahren für ein Metall bekannt. Einem Materialmodell wird eine Anfangstemperatur des Metalls sowie Anfangsanteile, in denen das Metall in zumindest zwei Phasen vorliegt, vorgegeben. Wie die Anteile der Phasen konkret bestimmt werden, geht aus der Schrift nicht hervor.

Zusammenfassung der Erfindung

Die Aufgabe der Erfindung ist es, die Nachteile des Stands der Technik zu überwinden und ein Verfahren, ein Computerprogrammprodukt, und eine Vorrichtung zur Bestimmung des ferritischen Phasenanteils nach dem Erwärmen oder Abkühlen eines Stahlbands anzugeben, mit denen der ferritische Phasenanteil

- online, d.h. ohne Unterbrechung des laufenden Betriebs,
- rasch, d.h. innerhalb einer kurzen Zeit für die Messung und Auswertung,
- mit möglichst einfachen Mitteln, d.h. ohne aufwändige Messgeräte,
- ohne eine aufwändige Auswertung, und
- mit ausreichend hoher Genauigkeit bestimmt werden kann.

Diese Aufgabe wird durch ein Verfahren zur Bestimmung des ferritischen Phasenanteils $x_\alpha$ nach dem Erwärmen oder Abkühlen eines Stahlbands nach Anspruch 1 gelöst. Vorteilhafte Ausführungsformen sind Gegenstand der abhängigen Ansprüche.

Konkret weist das Verfahren folgende Verfahrensschritte auf:

- Messen einer Breite $w_1$ und einer Temperatur $T_1$ des Stahlbands, wobei das Stahlband während der Messungen einen ferritischen Phasenanteil $\chi_{\alpha 1}$ aufweist;
- Erwärmen oder Abkühlen des Stahlbands, wobei im Stahlband beim Erwärmen zumindest teilweise eine Phasen-

umwandlung $\alpha \to \gamma$ von einem ferritischen Zustand $\alpha$ in den austenitischen Zustand $\gamma$ und beim Abkühlen zumindest teilweise eine Phasen umwandlung vom austenitischen Zustand $\gamma$ in einen ferritischen Zustand $\alpha$ stattfindet;

- Messen einer Breite $w$ und einer Temperatur $T$ des zumindest teilweise umgewandelten Stahlbands;
- Bestimmen des ferritischen Phasenanteils $x_\alpha$ durch

$$x_\alpha = \frac{-w - w\, x_{\alpha 1}\, \alpha_\alpha\, (T_1 - T_0) - w\, \alpha_\gamma (T_1 - T_0) + w\, x_{\alpha 1} \alpha_\gamma (T_1 - T_0) + w_1 + w_1\, \alpha_\gamma (T - T_0)}{w_1 \left[ -\alpha_\alpha (T - T_0) + \alpha_\gamma (T - T_0) \right]},$$

wobei

$T_0$ eine Referenztemperatur ist, und
$\alpha_\alpha$ und $\alpha_\gamma$ die linearen Wärmeausdehnungskoeffizienten von Ferrit und Austenit sind.

Dabei wird - typischerweise entweder unmittelbar nach dem austenitischen Fertigwalzen (wobei das Stahlband beim letzten Walzstich ein vollständig austenitisches Gefüge aufweist) des Stahlbands in einem Warmwalzwerk, oder unmittelbar nach dem Abkühlen (wobei das Stahlband nach dem Abkühlen ein vollständig ferritisches Gefüge aufweist) des Stahlbands in einer Kühlstrecke - die Breite $w_1$ und die Temperatur $T_1$ des Stahlbands gemessen, wobei das Stahlband einen ferritischen Phasenanteil $x_{\alpha 1}$ aufweist. Dieser ferritische Phasenanteil $x_{\alpha 1}$ ist entweder aus der Prozessführung hinreichend genau bekannt (z.B. nach dem austenitischen Fertigwalzen mit $x_{\alpha 1}=0$) oder wird durch Methoden zur Bestimmung der Phasenanteile nach dem Stand der Technik einmal bestimmt. Die beiden Messungen zur Bestimmung der Breite $w_1$ und der Temperatur $T_1$ erfolgen vorteilhafterweise berührungslos, z.B. durch eine optische Breitenmessung bzw. einen Pyrometer. Für eine möglichst hohe Genauigkeit ist es vorteilhaft, wenn beide Messungen ungefähr zur selben Zeit auf demselben Abschnitt des - typischerweise ungeschnittenen - Bands erfolgen. Anschließend wird das Stahlband erwärmt (z.B. in einer Heizstrecke) oder abgekühlt (z.B. in einer Kühlstrecke).

Beim Abkühlen wird das Gefüge des Stahlbands zumindest teilweise vom austenitischen Zustand $\gamma$ (d.h. vom Austenit) in einen ferritischen Zustand $\alpha$ (z.B. in einen Ferrit, oder einen Martensit...) umgewandelt. Beim Erwärmen wird das Gefüge des Stahlbands zumindest teilweise von einem ferritischen Zustand $\alpha$ in den austenitischen Zustand $\gamma$ umgewandelt.

Nach dem Erwärmen oder Abkühlen des Stahlbands wird wiederum die Breite $w$ und die Temperatur $T$ des zumindest teilweise umgewandelten Stahlbands ermittelt. Auch hierbei ist es vorteilhaft, wenn beide Messungen ungefähr zur selben Zeit auf demselben Abschnitt des Bands erfolgen.

Schließlich wird der ferritische Phasenanteil $x_\alpha$ durch die Formel $x_\alpha = \frac{-w - w\, x_{\alpha 1}\, \alpha_\alpha\, (T_1 - T_0) - w\, \alpha_\gamma (T_1 - T_0) + w\, x_{\alpha 1} \alpha_\gamma (T_1 - T_0) + w_1 + w_1\, \alpha_\gamma (T - T_0)}{w_1 \left[ -\alpha_\alpha (T - T_0) + \alpha_\gamma (T - T_0) \right]}$ be-stimmt, wobei zur Bestimmung des ferritischen Phasenanteils $x_\alpha$ neben den Breiten $w_1$ und $w$, den Temperaturen $T_1$ und $T$, lediglich einige physikalische Parameter für das Stahlband, wie die Längenausdehnungsfunktionen $\alpha_\gamma$ für Austenit und $\alpha_\alpha$ für einen Ferrit verwendet werden. Diese Funktionen werden typischerweise als linear angenommen; deren Parameter - in der Literatur meist als linear Längenausdehnungskoeffizienten bezeichnet - sind dem Fachmann bekannt, z.B. aus http://www.memory-metalle.de/html/03_knowhow/PDF/MM_04_properties_d.pdf bzw. http://www.attempo.com/Daten/Kernmaterialien.pdf. Schließlich handelt es sich bei $T_0$ um eine Referenztemperatur von typischerweise 20 °C.

Bei einer alternativen Ausführungsform der Erfindung wird anstelle des linearen Längenausdehnungskoeffizienten der sog. räumliche Längenausdehnungskoeffizient verwendet. Dabei wird über die Längen- und Breitenänderung des Stahlbands während einer Abkühlung auf den ferritischen Phasenanteil rückgeschlossen.

Durch die Erfindung kann der umgewandelte Gefügeanteil online, d.h. während des laufenden Betriebs der metallurgischen Anlage, mit einer ausreichend hohen Genauigkeit und im Wesentlichen durch Gerätschaften bestimmt werden, die typischerweise bereits in metallurgischen Anlagen vorhanden sind. Zudem kann der - während des betrachteten Prozessschrittes vergrößerte oder verkleinerte - ferritische Phasenanteil durch die obige Formel einfach und rasch bestimmt werden.

Eine für die Praxis große Klasse von Anwendungsgebieten wird durch das Verfahren nach Anspruch 2 abgedeckt. Konkret werden beim Verfahren zur Bestimmung des ferritischen Phasenanteils $x_\alpha$ nach dem Erwärmen eines Stahlbands folgende Verfahrensschritte durchgeführt:

- Messen der Breite $w_1$ und der Temperatur $T_1$ des Stahlbands, wobei sich das Stahlband während der Messungen vollständig in einem ferritischen Zustand mit $x_{\alpha 1} = 1$ befindet;

- Erwärmen des Stahlbands, wobei im Stahlband zumindest teilweise eine Phasenumwandlung $\alpha \rightarrow \gamma$ vom ferritischen Zustand $\alpha$ in den austenitischen Zustand $\gamma$ stattfindet;
- Messen einer Breite $w$ und einer Temperatur $T$ des zumindest teilweise umgewandelten Stahlbands;
- Bestimmen des ferritischen Phasenanteils $x_\alpha$ durch

$$x_\alpha = \frac{-w - w\,\alpha_\alpha\,(T_1 - T_0) + w_1 + w_1\,\alpha_\gamma(T - T_0)}{w_1\bigl[-\alpha_\alpha(T - T_0) + \alpha_\gamma(T - T_0)\bigr]}.$$

Bei diesem Verfahren wird davon ausgegangen, dass das Stahlband anfangs vollständig in einem ferritischen Zustand vorliegt; dies ist oftmals der Fall, wenn das Stahlband vor, vorzugsweise unmittelbar vor, dem Messen der Breite $w_1$ und der Temperatur $T_1$ in einer Kühlstrecke (z.B. einer Laminarkühlstrecke) abgekühlt wird.

Beim technisch wichtigen Fall des Erwärmens des Stahlbands durch Glühen, erfolgt das Messen der Breite $w$ und der Temperatur $T$ des zumindest teilweise umgewandelten Stahlbands während und/oder nach dem Glühen.

Beim Glühen ist es besonders vorteilhaft, wenn die Glühdauer und/oder die Glühtemperatur beim Glühen in Abhängigkeit des ferritischen Phasenanteils $x_\alpha$, vorzugsweise geregelt, eingestellt wird.

Die Einstellung der Glühdauer kann einfach über die Durchlaufgeschwindigkeit des Bands durch die Glühe erfolgen. Hierbei ist jedoch zu beachten, dass die Durchlaufgeschwindigkeit des Bands auch den Durchsatz durch die Glühe verändert. Beim direkt gekoppelten Betrieb einer Glühe mit einer Abkühlstrecke (engl. *rapid cooling zone*) wird durch die Veränderung der Durchlaufgeschwindigkeit des Bands durch die Glühe auch die Geschwindigkeit beim Abkühlen (auch Quenchen) verändert.

Die Einstellung der Glühtemperatur erfolgt üblicherweise durch Brenner.

Beispielsweise kann beim interkritischen Glühen in einer Kontiglühe für kleinere und rasche Korrekturen des ferritischen Phasenanteils $x_\alpha$ die Durchlaufgeschwindigkeit verändert und unmittelbar anschließend die Glühtemperatur nachgezogen werden, da sich die Glühtemperatur naturgemäß träger als die Durchlaufgeschwindigkeit ändern lässt. Anschließend wird die Durchlaufgeschwindigkeit des Bands wieder sukzessive auf das gewünschte Soll zurückgefahren, wobei parallel dazu die Glühtemperatur angepasst wird, sodass der Ist-Phasenanteil $x_\alpha$ dem Soll-Phasenanteil möglichst genau entspricht.

Jedenfalls kann durch die gesteuerte oder geregelte Einstellung der Glühdauer und/oder der Glühtemperatur die Ist-Gefügezusammensetzung auf eine Soll-Gefügezusammensetzung eingestellt werden. Das Ziel-Gefüge wird besonders genau erreicht, wenn die Glühdauer und/oder die Glühtemperatur geregelt eingestellt wird. Bei der geregelten Einstellung der Glühdauer, wird ein Soll-Ist-Vergleich zwischen dem Soll-Phasenanteil und dem Ist-Phasenanteil $x_\alpha$ vorgenommen, wobei das Glühen solange fortgesetzt wird, bis der Ist-Phasenanteil $x_\alpha$ dem Soll-Phasenanteil möglichst genau entspricht. Bei der geregelten Einstellung der Glühtemperatur wird in Abhängigkeit vom Soll-Ist-Vergleich zwischen dem Soll-Phasenanteil und dem Ist-Phasenanteil $x_\alpha$ die Glühtemperatur solange angepasst, bis der Ist-Phasenanteil $x_\alpha$ dem Soll-Phasenanteil möglichst genau entspricht.

Ein weiterer technisch wichtiger Sonderfall des erfindungsgemäßen Verfahrens zur Bestimmung des ferritischen Phasenanteils nach dem Abkühlen eines Stahlbands wird durch Anspruch 7 abgedeckt. Konkret werden dabei folgende Verfahrensschritte durchgeführt:

- Messen der Breite $w_1$ und der Temperatur $T_1$ des Stahlbands, wobei sich das Stahlband während der Messungen vollständig im austenitischen Zustand mit $x_{\alpha 1} = 0$ befindet;
- Abkühlen des Stahlbands, wobei im Stahlband zumindest teilweise eine Phasenumwandlung vom austenitischen Zustand $\gamma$ in einen ferritischen Zustand $\alpha$ stattfindet;
- Messen einer Breite $w$ und einer Temperatur $T$ des zumindest teilweise umgewandelten Stahlbands;
- Bestimmen des ferritischen Phasenanteils $x_\alpha$ durch

$$x_\alpha = \frac{-w - w\,\alpha_\gamma\,(T_1 - T_0) + w_1 + w_1\,\alpha_\gamma(T - T_0)}{w_1\bigl[-\alpha_\alpha(T - T_0) + \alpha_\gamma(T - T_0)\bigr]}.$$

Dieser Sonderfall tritt insbesondere dann auf, wenn das Stahlband im "austenitischen Zustand" fertiggewalzt wird, d.h. das Stahlband das letzte Walzgerüst der Fertigwalzstraße im austenitischen Zustand verlässt und anschließend abgekühlt wird.

Besonders vorteilhaft ist es, wenn das Stahlband vor, vorzugsweise unmittelbar vor, dem Messen der Breite $w_1$ und der Temperatur $T_1$ warmgewalzt wird. Bei der bevorzugten Ausführungsform wird eine teilweise Phasenumwandlung vom austenitischen Zustand zwischen dem Warmwalzen und den Messungen von $w_1$ und $T_1$ verhindert.

Typischerweise wird das Stahlband nach dem Messen der Breite $w_1$ und der Temperatur $T_1$ in einer Kühlstrecke abgekühlt.

Beim Warmwalzen kann es zweckmäßig sein, wenn das Messen der Breite $w$ und der Temperatur $T$ des zumindest teilweise umgewandelten Stahlbands unmittelbar vor dem Aufwickeln erfolgt. Allerdings könnten diese Messungen auch vorher, z.B. während oder nach dem Abkühlen in einer Kühlstrecke, erfolgen.

Die Phasenumwandlung kann besonders genau eingestellt werden, wenn die Kühlung beim Abkühlen in der Kühlstrecke in Abhängigkeit der auf diesem Wege ermittelten ferritischen Phasenanteils $x_\alpha$ eingestellt wird.

Im einfachsten Fall wird die Kühlstrecke gesteuert eingestellt. Eine besonders genaue Einstellung der Phasenumwandlung erfolgt geregelt, d.h. durch einen Soll-Ist-Vergleich, wobei die Abweichung zwischen dem Soll- und dem Ist-Wert des ferritischen Phasenanteils für die Einstellung der Kühlstrecke verwendet wird. Dadurch kann selbst bei transienten Betriebsbedingungen der Umwandlungsgrad in der Kühlstrecke genau vorgegeben werden.

Die Abkühlung kann bspw. über die Kühldauer und/oder die Kühlintensität gesteuert oder vorzugsweise geregelt, in Abhängigkeit der ferritischen Phasenanteile $x_\alpha$ eingestellt werden.

Ein Computerprogrammprodukt zur Durchführung des erfindungsgemäßen Verfahrens, dem Werte für die Breite $w_1$ und die Temperatur $T_1$ vor der zumindest teilweisen Phasenumwandlung, die Breite $w$ und die Temperatur des Stahlbands nach der zumindest teilweisen Phasenumwandlung, und physikalische Parameter des Stahlbands zuführbar sind, weist ein Rechenmodul zur Berechnung des ferritischen Phasenanteils $x_\alpha$

$$x_\alpha = \frac{-w - w\, x_{\alpha 1}\, \alpha_\alpha\, (T_1 - T_0) - w\, \alpha_\gamma (T_1 - T_0) + w\, x_{\alpha 1} \alpha_\gamma (T_1 - T_0) + w_1 + w_1\, \alpha_\gamma (T - T_0)}{w_1 \left[ -\alpha_\alpha (T - T_0) + \alpha_\gamma (T - T_0) \right]}$$

auf. Somit kann das Computerprogrammprodukt in einen Rechner geladen werden, der das erfindungsgemäße Verfahren, bspw. in einer metallurgischen Anlage, ausführt.

Eine Vorrichtung zur Bestimmung des ferritischen Phasenanteils $x_\alpha$ nach dem Erwärmen oder Abkühlen eines Stahlbands in einer Kühlstrecke, insbesondere zur Durchführung des erfindungsgemäßen Verfahrens, weist auf

- eine erste Temperaturmesseinrichtung zur Messung von $T_1$ und eine erste Breitenmesseinrichtung zur Messung von $w_1$;
- eine zweite Temperaturmesseinrichtung zur Messung von $T$ und eine zweite Breitenmesseinrichtung zur Messung von $w$, wobei die erste Temperaturmesseinrichtung und die erste Breitenmesseinrichtung vor einer Heiz- oder einer Kühlstrecke, und die zweite Temperaturmesseinrichtung und die zweite Breitenmesseinrichtung nach der Heiz- oder Kühlstrecke angeordnet sind; und
- eine Recheneinheit zur Bestimmung des ferritischen Phasenanteils $x_\alpha = \frac{-w - w\, x_{\alpha 1}\, \alpha_\alpha\, (T_1 - T_0) - w\, \alpha_\gamma (T_1 - T_0) + w\, x_{\alpha 1} \alpha_\gamma (T_1 - T_0) + w_1 + w_1\, \alpha_\gamma (T - T_0)}{w_1 \left[ -\alpha_\alpha (T - T_0) + \alpha_\gamma (T - T_0) \right]}$, wobei die Recheneinheit signaltechnisch mit der ersten Temperaturmesseinrichtung, der ersten Breitenmesseinrichtung, der zweiten Temperaturmesseinrichtung und der zweiten Breitenmesseinrichtung verbunden ist.

Eine Beeinflussung der Phasenumwandlung während des Betriebs der erfindungsgemäßen Vorrichtung ist möglich, wenn die Kühlstrecke zumindest eine Kühldüse mit einer Stelleinrichtung oder die Heizstrecke zumindest ein Heizelement mit einer Stelleinrichtung aufweist, wobei die Recheneinheit signaltechnisch mit der Stelleinrichtung verbunden ist, sodass der ferritische Phasenanteil eingestellt werden kann.

Die Stelleinrichtung kann bei einer Kühlstrecke als ein Ventil, bspw. ein Kugelhahn mit Drehantrieb, ausgeführt sein, wobei das Ventil vom Kühlmedium (z.B. Wasser, Luft oder Wasser mit Luft etc.) durchströmt wird. Bei einer anderen Ausführungsform kann z.B. die Drehzahl einer Kreiselpumpe eingestellt werden, wodurch der Druck des Kühlmediums eingestellt werden kann.

Die Stelleinrichtung zur Einstellung der Temperatur in einer als Induktionsofen ausgebildeten Heizstrecke kann als ein sog. Frequenz-Umrichter ausgeführt sein, sodass der dem Frequenz-Umrichter zugeordnete Induktor des Induktionsofens mit variabler Frequenz und/oder Spannungshöhe angesteuert wird. Dadurch kann die Erwärmung des Stahlbands gezielt eingestellt werden.

Die Stelleinrichtung zur Einstellung der Glühtemperatur in einer Glühe kann als ein Ventil, bspw. ein Kugelhahn mit Drehantrieb, ausgeführt sein, wobei das Ventil entweder von einem Sauerstoffträger (typischerweise Luft oder Sauerstoff) oder einem Brennstoff (z.B. Heizöl, Erdgas etc.) durchströmt wird. Der Sauerstoffträger und der Brennstoff werden im Brenner verbrannt. Natürlich kann auch je eine Stelleinrichtung für den Sauerstoffträger und den Brennstoff vorhanden sein, sodass bspw. das Mengenverhältnis zwischen Sauerstoff und Brennstoff konstant (z.B. in der Nähe des stöchiometrischen Verhältnisses) gehalten wird.

Zweckmäßig ist es, wenn zwischen der Recheneinheit und der Stelleinrichtung eine Steuereinrichtung ist. Für eine hohe Genauigkeit ist es vorteilhaft, wenn dazwischen eine Regeleinrichtung angeordnet ist.

Vorteilhaft ist es, wenn die Heiz- oder Kühlstrecke in der Transportrichtung des Stahlbands zumindest zwei Abschnitte aufweist, wobei vor jedem Abschnitt eine erste Temperaturmesseinrichtung und eine erste Breitenmesseinrichtung und nach jedem Abschnitt eine zweite Temperaturmesseinrichtung und eine zweite Breitenmesseinrichtung angeordnet sind, und jeder Abschnitt eine Recheneinheit zur Bestimmung des ferritischen Phasenanteils $x_\alpha$ aufweist. Dadurch kann die Phasenumwandlung auch innerhalb der Abschnitte der Heiz- bzw. Kühlstrecke ermittelt werden.

Besonders vorteilhaft ist es, wenn jede Kühlstrecke zumindest eine Kühldüse mit einer Stelleinrichtung aufweist, und die Recheneinheit signaltechnisch mit der Stelleinrichtung verbunden ist, sodass der ferritische Phasenanteil in der Kühlstrecke eingestellt werden kann. Dadurch kann die Phasenumwandlung innerhalb der Kühlstrecke ganz gezielt beeinflusst werden, z.B. gesteuert oder geregelt.

Um eine Verfälschung der Temperaturmesswerte $T_1$ und $T$ durch Kühlwasser zu verhindern, ist es vorteilhaft, wenn vor der ersten und/oder der zweiten Temperaturmesseinrichtung eine Abblaseeinrichtung zum Abblasen des Stahlbands angeordnet ist. Bei der Abblaseeinrichtung kann es sich z.B. um eine Luftdüse handeln, die durch Druckluft Kühlwasser vom Stahlband abbläst.

Kurze Beschreibung der Zeichnungen

Weitere Vorteile und Merkmale der vorliegenden Erfindung ergeben sich aus der nachfolgenden Beschreibung nicht einschränkender Ausführungsbeispiele, wobei die folgenden Figuren zeigen:

Fig 1 eine Seitenansicht und eine Darstellung im Grundriss eines Teils eines Warmwalzwerks mit einer Vorrichtung zur Durchführung des erfindungsgemäßen Verfahrens

Fig 2 eine Seitenansicht eines Teils eines Warmwalzwerks mit einer Variante der Vorrichtung zur Durchführung des erfindungsgemäßen Verfahrens

Fig 3 eine schematische Darstellung eines Temperaturverlaufs in einer Kontiglühe zum interkritischen Glühen eines Stahlbands

Beschreibung der Ausführungsformen

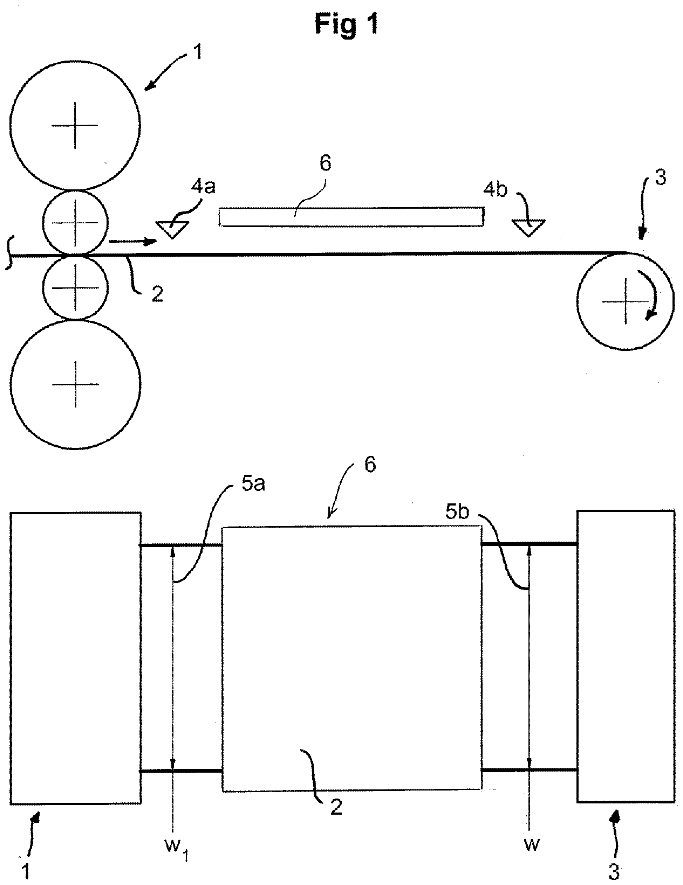

Die Fig 1 zeigt einen hinteren Teil eines Warmwalzwerks zur Produktion eines Stahlbands. Konkret wird im Warmwalzwerk ein Stahlband 2 aus dem Werkstoff CK60 mit einer Dicke von 2 mm und einer Breite von 1800 mm produziert. Das Stahlband 2 wird im letzten Walzgerüst 1 der nicht vollständig dargestellten Fertigwalzstraße vollständig im austenitischen Zustand bei einer Temperatur von $T_{FM}$ = 800°C fertiggewalzt und verlässt das letzte Walzgerüst 1 mit einer Transportgeschwindigkeit von bspw. 6 bis 8 m/s. Unmittelbar nach dem Fertigwalzen wird die Temperatur $T_1$ des Stahlbands 2 durch eine erste Temperaturmesseinrichtung 4a, konkret einen Pyrometer, erfasst. Zeitgleich dazu wird die Breite $w_1$ des Stahlbands 2 durch eine erste Breitenmesseinrichtung 5a, die hier als Kamera ausgebildet ist, erfasst. Anschließend wird das Stahlband 2 in einer Kühlstrecke 6 abgekühlt, wodurch sich der austenitische Phasenanteil $\gamma$ im Gefüge des Stahlbands 2 zumindest teilweise in ferritische Phasenanteile $\alpha$ umwandelt. Ziel der Erfindung ist es, den Grad der Umwandlung $\gamma \rightarrow \alpha$ in der Kühlstrecke 6 bzw. nach der Kühlstrecke (z.B. vor dem Aufwickeln in der Wickeleinrichtung 3) zu bestimmen. Dazu wird das Stahlband 2 in der durch den Pfeil dargestellten Transportrichtung durch die Kühlstrecke 6 bewegt und dabei abgekühlt. Die Abkühlung des Bands 2 erfolgt durch mehrere Kühldüsen, die nicht extra dargestellt worden sind. Nach der Kühlstrecke 6 wird die Temperatur T und die Breite w des Stahlbands 2 durch eine zweite Temperaturmesseinrichtung 4b, konkret einen Pyrometer oder eine Wärmekamera, und eine zweite Breitenmesseinrichtung 5b erfasst. Anschließend wird das Stahlband durch die Wickeleinrichtung 3 zu einem Haspel (engl. *coil*) aufgewickelt.

Durch die Kenntnis der Temperaturen und Breiten an zumindest zwei Stellen des Bands vor und nach einer Abkühlung sowie unter der Voraussetzung eines vollständig austenitischen Anfangszustandes und der Längenausdehnungskoeffizienten für Ferrit und Austenit, kann der ferritische Phasenanteil $x_\alpha$ ermittelt werden. Dies wird nachfolgend skizziert:

Die Breite w eines Stahlbands in Abhängigkeit der Temperatur T ist gegeben durch $w = w_0[1 + \alpha(T - T_0)]$, wobei $w_0$ der Breite des Stahlbands bei einer Referenztemperatur $T_0$ von typischerweise 20°C entspricht und $\alpha$ der lineare Temperaturausdehnungskoeffizient ist. Selbstverständlich kann anstelle des linearen Ansatzes auch ein polynomialer Ansatz mit höherer Ordnung verwendet werden.

Da die austenitische Phase $\gamma$ einen anderen Längenausdehnungskoeffizient $\alpha_\gamma$ als eine ferritische Phase $\alpha^{(i)}$ mit $\alpha_\alpha^{(i)}$ aufweist, kann die Breite eines Stahlbands, das einen Anteil $x_\alpha^{(i)}$ einer ferritischen Phase (i) und einen Anteil $x_\gamma$ der austentischen Phase $\gamma$ aufweist, in einem gemischten Ansatz wie folgt angeschrieben werden

$$w = w_0\left[1 + x_\gamma\alpha_\gamma(T - T_0) + \sum_i x_\alpha^{(i)}\alpha_\alpha^{(i)}(T - T_0)\right]$$

Nimmt man weiter an, dass nur eine ferritische Phase $\alpha$ (typischerweise Ferrit) im Stahlband bei der Abkühlung vorhanden ist, so vereinfacht sich die vorige Ausdruck zu

$$w = w_0\left[1 + x_\gamma\alpha_\gamma(T - T_0) + x_\alpha\alpha_\alpha(T - T_0)\right]$$

Weiter ist bekannt, dass die Summe der austenitischen Phase und aller ferritischen Phasen stets 1 beträgt, d.h.

$$x_\gamma + \sum_i x_\alpha^{(i)} = 1$$

Liegt nur eine ferritische Phase vor, so gilt $x_\gamma + x_\alpha = 1$.

Für den Fall mit nur einer ferritischen Phase gilt daher

$$w = w_0\left[1 + (1 - x_\alpha)\alpha_\gamma(T - T_0) + x_\alpha\alpha_\alpha(T - T_0)\right]$$

Somit gilt für den ferritischen Phasenanteil

$$x_\alpha = \frac{\dfrac{w}{w_0} - 1 - \alpha_\gamma(T - T_0)}{(T - T_0)(\alpha_\alpha - \alpha_\gamma)}$$

Die Breite $w_1$ des Stahlbands bei einer Temperatur $T_1$ beim austenitischen Walzen ist gegeben durch

$$w_1 = w_0\left[1 + \alpha_\gamma(T_1 - T_0)\right]$$

wobei $\alpha_\gamma$ der lineare Ausdehnungskoeffizient von Austenit ist.

Durch Kombination der letzten zwei Gleichungen gilt

$$x_\alpha = \frac{w\left[1 + \alpha_\gamma(T_1 - T_0)\right] - w_1 - w_1\alpha_\gamma(T - T_0)}{w_1\left[\alpha_\alpha(T - T_0) - \alpha_\gamma(T - T_0)\right]}$$

Konkret ergibt sich für $w_1$ = 1,8 $m$, $\alpha_\gamma$ = 1 · 10^-5 1/K (siehe http://www.memory-metalle.de/html/03_knowhow/PDF/MM_04_properties_d.pdf) und $\alpha_\alpha$=6·10^-6 1/K (siehe http://www.attempo.com/Daten/Kernmaterialien.pdf) aus der letzten Gleichung bei $T$ = 400 °C und einer Breite von $w$ = 1,7923 $m$ ein ferritischer Phasenanteil $x_\alpha$ = 20%.

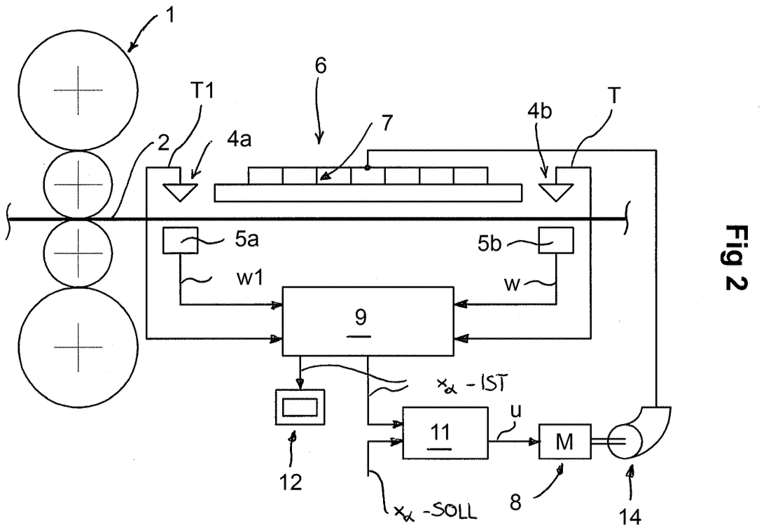

Die Fig 2 zeigt eine weitere Seitenansicht eines hinteren Teils eines anderen Warmwalzwerks zur Erzeugung eines Stahlbands 2. Hierin sind die Temperaturmesswerte $T_1$ und T der ersten und zweiten Temperaturmesseinrichtungen 4a und 4b, sowie die Breitenmesswerte $w_1$ und w der ersten und zweiten Breitenmesseinrichtungen 5a und 5b symbolisch dargestellt. Die Messwerte $T_1$, T, $w_1$ und w werden in einer Recheneinheit 9 verarbeitet, wobei unter Berücksichtigung weiterer physikalischer Parameter des Stahls der Ist-Wert des ferritischen Phasenanteils $x_\alpha$ bestimmt

wird. Zum Einen wird der Ist-Wert in einer als Display ausgebildeten Ausgabeeinheit 12 angezeigt, zum Anderen wird der Ist-Wert einer Regeleinrichtung 11 zugeführt, die durch einen Soll-Ist-Vergleich mit einem Soll-Wert der Summe der ferritischen *Phasenanteile* $x_\alpha$ eine nicht dargestellte Regelabweichung berechnet. In Abhängigkeit der Regelabweichung gibt die Regeleinrichtung zumindest eine Stellgröße u aus, die im konkreten Fall einem Elektromotor M als Stelleinrichtung 8 zugeführt wird. In Abhängigkeit der Stellgröße u verändert der Motor M seine Drehzahl, was wiederum den Druck des Kühlmediums beeinflusst, der von der Kreiselpumpe 14 den einzelnen Kühldüsen 7 der Kühlstrecke 6 zugeführt wird. Durch diese Anordnung wird sichergestellt, dass der Ist-Wert der Summe der ferritischen Phasenanteile im Stahlband 2 dem Soll-Wert weitgehend entspricht, und zwar im Wesentlichen unabhängig von transienten Veränderungen in der Betriebsführung des Warmwalzwerks. Die beiden Breitenmesseinrichtung 5a, 5b sind bei dieser Ausführungsform als sog. Zeilenkameras unterhalb des Bands 2 ausgebildet. Nicht dargestellt sind die beiden als Druckluftdüsen ausgebildeten Abblaseeinrichtungen bei den Pyrometern 4a, 4b.

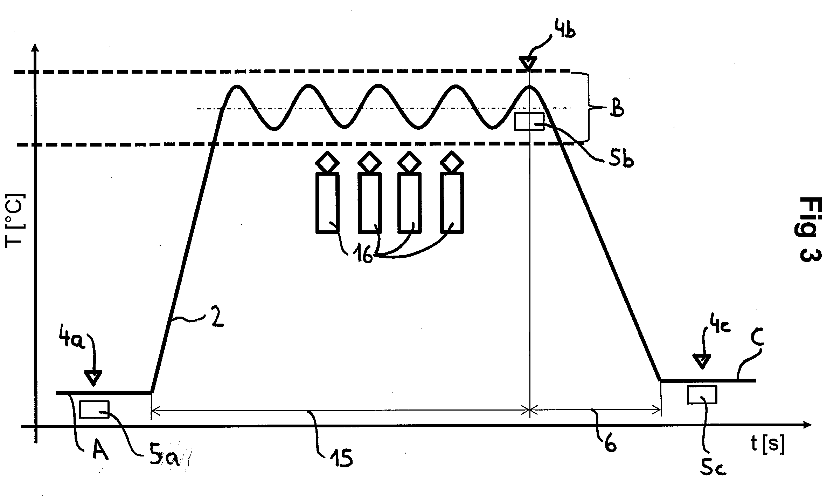

Die Fig 3 zeigt als Beispiel eine schematische Darstellung der Temperaturführung in einer sogenannten Kontiglühe zur Herstellung eines Kaltband TRIP-Stahls. Im Eingangsbereich der Anlage werden die Breite $w_1$ und die Temperatur $T_1$ des in einem Anfangszustand A vorliegenden Stahlbands 2 gemessen. Dies erfolgt durch die erste Breitenmesseinrichtung 5a und die erste Temperaturmesseinrichtung 4a. Im Anfangszustand A enthält das Stahlband 2 ferritische und perlitische Phasenbestandteile. Anschließend wird das Stahlband 2 in die als Glühe ausgebildete Heizstrecke 15 eingeführt, wobei das Stahlband 2 erwärmt wird. In der Heizstrecke 15 wird das Stahlband durch mehrere über die Längserstreckung der Heizstrecke angeordnete Brenner 16 erwärmt, wodurch sich die ferritischen Gefügebestandteile teilweise in ein austenitisches Gefüge umwandeln. Während des Glühens liegt das Stahlband in einem Zwischenzustand B vor, das durch die Koexistenz von ferritischen und austenitischen Phasen gekennzeichnet ist. Die Glühtemperatur wird bei einer bestimmten Durchlaufgeschwindigkeit durch die Kontiglühe so eingestellt, dass der Ist-Austenitanteil im Stahlband vor dem Abkühlen möglichst genau der Sollvorgabe entspricht. Am Ende der Heizstrecke 15 werden wiederum die Breite w und die Temperatur T des im Zwischenzustand B vorliegenden Stahlbands 2 gemessen; dies erfolgt durch die zweite Breitenmesseinrichtung 5b und die zweite Temperaturmesseinrichtung 4b. Der Ist-Austenitanteil wird gemäß dem Verfahren zur Bestimmung des ferritischen Phasenanteils $x_\alpha$ nach dem Erwärmen eines Stahlbands unter Berücksichtigung von w, $w_1$, T, $T_1$ bestimmt, wobei die Summe der austenitischen Phase und aller ferritischen Phasen stets 1 beträgt. Anschließend wird das Stahlband 2 in der Abkühlstrecke 6 abgekühlt, sodass sich im abgekühlten Stahlband 2 ein bevorzugt ferritisch-bainitisches (möglicherweise mit einem martensitischen Restanteil) Gefüge mit Restaustenit-Inseln einstellt. Unmittelbar nach dem Ende der Kühlstrecke 6 werden die Breite $w_2$ und die Temperatur $T_2$ des in einem Endzustand C vorliegenden Stahlbands 2 gemessen; dies erfolgt durch die dritte Breitenmesseinrichtung 5c und die dritte Temperaturmesseinrichtung 4c. Die Bestimmung der Phasenanteile im abgekühlten Stahlband 2 erfolgt gemäß dem Verfahren zur Bestimmung des ferritischen Phasenanteils $x_\alpha$ nach dem Abkühlen eines Stahlbands unter Berücksichtigung von $w_1$, $T_1$, $w_2$ und $T_2$.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 1 | Walzgerüst |
| 2 | Stahlband |
| 3 | Wickeleinrichtung |
| 4 | Temperaturmesseinrichtung |
| 4a,4b,4c | erste, zweite und dritte Temperaturmesseinrichtung |
| 5 | Breitenmesseinrichtung |
| 5a,5b,5c | erste, zweite und dritte Breitenmesseinrichtung |
| 6 | Kühlstrecke |
| 7 | Kühldüse |
| 8 | Stelleinrichtung |
| 9 | Recheneinheit |
| 11 | Regeleinrichtung |
| 12 | Ausgabeeinheit |
| 14 | Kreiselpumpe |
| 15 | Heizstrecke |
| 16 | Brenner |

$\alpha$      linearer Wärmeausdehnungskoeffizient
T      Temperatur
u      Stellgröße
w      Breite
x      Phasenanteil
$x_\alpha$      ferritischer Phasenanteil
$x_\gamma$      austenitischer Phasenanteil

A      Anfangszustand: Ferrit und Perlit
B      Zwischenzustand: Interkritischer Bereich (Ferrit und Austenit Koexistenz)
C      Endzustand: Ferrit, Bainit, Martensit und Rest-Austenit

**Patentansprüche**

**1.** Verfahren zur Bestimmung des ferritischen Phasenanteils $x_\alpha$ nach dem Erwärmen oder Abkühlen eines Stahlbands (2), aufweisend die Verfahrensschritte:

     - Messen einer Breite $w_1$ und einer Temperatur $T_1$ des Stahlbands (2), wobei das Stahlband (2) während der Messungen einen ferritischen Phasenanteil $x_{\alpha 1}$ aufweist;
     - Erwärmen oder Abkühlen des Stahlbands (2), wobei im Stahlband (2) beim Erwärmen zumindest teilweise eine Phasenumwandlung $\alpha \to \gamma$ von einem ferritischen Zustand $\alpha$ in den austenitischen Zustand $\gamma$ und beim Abkühlen zumindest teilweise eine Phasenumwandlung vom austenitischen Zustand $\gamma$ in einen ferritischen Zustand $\alpha$ stattfindet;
     - Messen einer Breite $w$ und einer Temperatur $T$ des zumindest teilweise umgewandelten Stahlbands (2);
     - Bestimmen des ferritischen Phasenanteils $x_\alpha$ durch

$$x_\alpha = \frac{-w - w\, x_{\alpha 1}\, \alpha_\alpha\, (T_1 - T_0) - w\, \alpha_\gamma (T_1 - T_0) + w\, x_{\alpha 1} \alpha_\gamma (T_1 - T_0) + w_1 + w_1\, \alpha_\gamma (T - T_0)}{w_1 \left[ -\alpha_\alpha (T - T_0) + \alpha_\gamma (T - T_0) \right]},$$

wobei

     $T_0$ eine Referenztemperatur ist, und
     $\alpha_\alpha$ und $\alpha_\gamma$ die linearen Wärmeausdehnungskoeffizienten von Ferrit und Austenit sind.

**2.** Verfahren zur Bestimmung des ferritischen Phasenanteils $x_\alpha$ nach dem Erwärmen eines Stahlbands (2) nach Anspruch 1, **gekennzeichnet durch**

     - das Messen der Breite $w_1$ und der Temperatur $T_1$ des Stahlbands (2), wobei sich das Stahlband (2) während der Messungen vollständig in einem ferritischen Zustand mit $x_{\alpha 1} = 1$ befindet;
     - Erwärmen des Stahlbands (2), wobei im Stahlband (2) zumindest teilweise eine Phasenumwandlung $\alpha \to \gamma$ vom ferritischen Zustand $\alpha$ in den austenitischen Zustand $\gamma$ stattfindet;
     - Messen einer Breite $w$ und einer Temperatur $T$ des zumindest teilweise umgewandelten Stahlbands (2);
     - Bestimmen des ferritischen Phasenanteils $x_\alpha$ **durch**

$$x_\alpha = \frac{-w - w\, \alpha_\alpha\, (T_1 - T_0) + w_1 + w_1\, \alpha_\gamma (T - T_0)}{w_1 \left[ -\alpha_\alpha (T - T_0) + \alpha_\gamma (T - T_0) \right]}.$$

**3.** Verfahren nach einem der vorhergehenden Ansprüche, **dadurch gekennzeichnet, dass** das Stahlband (2) vor, vorzugsweise unmittelbar vor, dem Messen der Breite $w_1$ und der Temperatur $T_1$ in einer Kühlstrecke abgekühlt wird.

**4.** Verfahren nach einem der vorhergehenden Ansprüche, **dadurch gekennzeichnet, dass** das Messen der Breite $w$ und der Temperatur $T$ des zumindest teilweise umgewandelten Stahlbands (2) während oder nach dem Glühen erfolgt.

5. Verfahren nach Anspruch 4, **dadurch gekennzeichnet, dass** die Glühdauer und/oder die Glühtemperatur beim Glühen in Abhängigkeit des ferritischen Phasenanteils $x_\alpha$ eingestellt wird.

6. Verfahren nach Anspruch 5, **dadurch gekennzeichnet, dass** die Glühdauer und/oder die Glühtemperatur gesteuert oder geregelt eingestellt wird.

7. Verfahren zur Bestimmung des ferritischen Phasenanteils $x_\alpha$ nach dem Abkühlen eines Stahlbands (2) nach Anspruch 1, **gekennzeichnet durch**

- das Messen der Breite $w_1$ und der Temperatur $T_1$ des Stahlbands (2), wobei sich das Stahlband (2) während der Messungen vollständig im austenitischen Zustand mit $x_{\alpha 1} = 0$ befindet;
- Abkühlen des Stahlbands (2), wobei im Stahlband (2) zumindest teilweise eine Phasenumwandlung vom austenitischen Zustand $\gamma$ in einen ferritischen Zustand $\alpha$ stattfindet;
- Messen einer Breite $w$ und einer Temperatur $T$ des zumindest teilweise umgewandelten Stahlbands (2);
- Bestimmen des ferritischen Phasenanteils $x_\alpha$ **durch**

$$\mathrm{x}_\alpha = \frac{-w - w\,\alpha_\gamma\,(T_1 - T_0) + \mathrm{w}_1 + \mathrm{w}_1\,\alpha_\gamma(\mathrm{T} - T_0)}{w_1\big[-\alpha_\alpha(T - T_0) + \alpha_\gamma(T - T_0)\big]}.$$

8. Verfahren nach einem der Ansprüche 1 und 7, **dadurch gekennzeichnet, dass** das Stahlband (2) vor, vorzugsweise unmittelbar vor, dem Messen der Breite $w_1$ und der Temperatur $T_1$ warmgewalzt wird.

9. Verfahren nach einem der Ansprüche 1 und 7 bis 8, **dadurch gekennzeichnet, dass** das Messen der Breite $w$ und der Temperatur $T$ des zumindest teilweise umgewandelten Stahlbands (2) während oder nach dem Abkühlen in einer Kühlstrecke (6) erfolgt.

10. Verfahren nach Anspruch 9, **dadurch gekennzeichnet, dass** die Abkühlung in Abhängigkeit des ferritischen Phasenanteils $x_\alpha$ eingestellt wird.

11. Verfahren nach Anspruch 11, **dadurch gekennzeichnet, dass** die Kühldauer und/oder die Kühlintensität bei der Abkühlung gesteuert oder geregelt eingestellt wird.

12. Computerprogrammprodukt zur Durchführung des Verfahrens nach einem der vorhergehenden Ansprüche, **dadurch gekennzeichnet, dass** dem Computerprogramm Werte für die Breite $w_1$ und die Temperatur $T_1$ vor der zumindest teilweisen Phasenumwandlung, die Breite $w$ und die Temperatur $T$ des Stahlbands nach der zumindest teilweisen Phasenumwandlung, und physikalische Parameter des Stahlbands zuführbar sind, und das Computerprogrammprodukt eine Rechenmodul zur Berechnung des ferritischen Phasenanteils $x_\alpha$

$$\mathrm{x}_\alpha = \frac{-w - w\,x_{\alpha 1}\,\alpha_\alpha\,(T_1 - T_0) - \mathrm{w}\,\alpha_\gamma(T_1 - T_0) + \mathrm{w}\,x_{\alpha 1}\alpha_\gamma(T_1 - T_0) + \mathrm{w}_1 + \mathrm{w}_1\,\alpha_\gamma(T - T_0)}{w_1\big[-\alpha_\alpha(T - T_0) + \alpha_\gamma(T - T_0)\big]} \text{ aufweist.}$$

13. Vorrichtung zur Bestimmung des ferritischen Phasenanteils $x_\alpha$ nach dem Erwärmen oder Abkühlen eines Stahlbands (2), insbesondere zur Durchführung des Verfahrens nach einem der Ansprüche 1 bis 11, aufweisend

- eine erste Temperaturmesseinrichtung (4a) zur Messung von $T_1$ und eine erste Breitenmesseinrichtung (5a) zur Messung von $w_1$;
- eine zweite Temperaturmesseinrichtung (5a) zur Messung von $T$ und eine zweite Breitenmesseinrichtung (5b) zur Messung von $w$, wobei die erste Temperaturmesseinrichtung (4a) und die erste Breitenmesseinrichtung (5a) vor einer Heizstrecke oder einer Kühlstrecke (6), und die zweite Temperaturmesseinrichtung (4b) und die zweite Breitenmesseinrichtung (5b) nach der Heizstrecke oder der Kühlstrecke (6) angeordnet sind;
- eine Recheneinheit (9) zur Bestimmung des ferritischen Phasenanteils

$$\mathrm{x}_\alpha = \frac{-w - w\,x_{\alpha 1}\,\alpha_\alpha\,(T_1 - T_0) - \mathrm{w}\,\alpha_\gamma(T_1 - T_0) + \mathrm{w}\,x_{\alpha 1}\alpha_\gamma(T_1 - T_0) + \mathrm{w}_1 + \mathrm{w}_1\,\alpha_\gamma(T - T_0)}{w_1\big[-\alpha_\alpha(T - T_0) + \alpha_\gamma(T - T_0)\big]} \text{, wobei die Recheneinheit}$$

(9) signaltechnisch mit der ersten Temperaturmesseinrichtung (4a), der ersten Breitenmesseinrichtung (5a), der zweiten Temperaturmesseinrichtung (4b) und der zweiten Breitenmesseinrichtung (5b) verbunden ist.

**14.** Vorrichtung nach Anspruch 13, wobei die Kühlstrecke (6) zumindest eine Kühldüse (7) mit einer Stelleinrichtung (8) oder die Heizstrecke zumindest ein Heizelement mit einer Stelleinrichtung (8) aufweist, **dadurch gekennzeichnet, dass** die Recheneinheit (9) signaltechnisch mit der Stelleinrichtung (8) verbunden ist, sodass der ferritische Phasenanteil eingestellt werden kann.

**15.** Vorrichtung nach Anspruch 14, **dadurch gekennzeichnet, dass** zwischen der Recheneinheit (9) und der Stelleinrichtung (8) eine Steuereinrichtung oder eine Regeleinrichtung (11) angeordnet ist, wobei die Steuer- oder Regeleinrichtung (11) signaltechnisch mit der Recheneinheit (9) und der Stelleinrichtung (8) verbunden ist.

**Claims**

**1.** Method for determining the ferritic phase fraction $x_\alpha$ after heating or cooling of a steel strip (2), having the method steps:

- Measuring a width $w_1$ and a temperature $T_1$ of the steel strip (2), wherein the steel strip (2) has a ferritic phase fraction $x_{\alpha 1}$ during the measurements;
- Heating or cooling the steel strip (2), wherein a phase conversion $\alpha \to \gamma$ from a ferritic state $\alpha$ into an austenitic state $\gamma$ takes place at least partly in the steel strip (2) during heating and a phase conversion from an austenitic state $\gamma$ into a ferritic state $\alpha$ takes place at least partly in the steel strip (2) during cooling;
- Measuring a width $w$ and a temperature $T$ of the at least partly converted steel strip (2);
- Determining the ferritic phase fraction $x_\alpha$ through

$$X_\alpha = \frac{-w-w\,x_{\alpha 1}\,\alpha_\alpha\,(T_1-T_0)-w\,\alpha_\gamma(T_1-T_0)+w\,x_{\alpha 1}\alpha_\gamma(T_1-T_0)+w_1+w_1\,\alpha_\gamma(T-T_0)}{w_1\left[-\alpha_\alpha(T-T_0)+\alpha_\gamma(T-T_0)\right]},$$

wherein

$T_0$ is a reference temperature and
$\alpha_\alpha$ and $\alpha_\gamma$ are the linear coefficients of thermal expansion of ferrite and austenite.

**2.** Method for determining the ferritic phase fraction $x_\alpha$ after the heating of a steel strip according to claim 1, **characterised by**

- Measuring the width $w_1$ and the temperature $T_1$ of the steel strip (2), wherein the steel strip (2) is entirely in a ferritic state with $x_{\alpha 1} = 1$ during the measurement;
- Heating the steel strip (2), wherein a phase conversion $\alpha \to \gamma$ from a ferritic state $\alpha$ into the austenitic state $\gamma$ takes place at least partly in the steel strip (2);
- Measuring a width $w$ and a temperature $T$ of the at least partly converted steel strip (2);
- Determining the ferritic phase fraction $x_\alpha$ through

$$X_\alpha = \frac{-w-w\,\alpha_\alpha\,(T_1-T_0)+w_1+w_1\,\alpha_\gamma(T-T_0)}{w_1\left[-\alpha_\alpha(T-T_0)+\alpha_\gamma(T-T_0)\right]}.$$

**3.** Method according to one of the preceding claims, **characterised in that** the steel strip (2) is cooled in a cooling zone before, preferably immediately before, the measurement of the width $w_1$ and the temperature $T_1$.

**4.** Method according to one of the preceding claims, **characterised in that** the width $w$ and the temperature $T$ of the at least partly converted steel strip (2) are measured during or after annealing.

**5.** Method according to claim 4, **characterised in that** the annealing duration and/or the annealing temperature are set during annealing as a function of the ferritic phase fraction $x_\alpha$.

**6.** Method according to claim 5, **characterised in that** the annealing duration and/or the annealing temperature are set under open-loop or closed-loop control.

7. Method for determining the ferritic phase fraction $x_\alpha$ after cooling of a steel strip (2) according to claim 1, **characterised by :**

   - Measuring the width $w_1$ and the temperature $T_1$ of the steel strip (2), wherein the steel strip (2) is entirely in the austenitic state with $x_{\alpha 1} = 0$ during the measurements;
   - Cooling the steel strip (2), wherein a phase conversion from an austenitic state $\gamma$ into a ferritic state $\alpha$ takes place at least partly in the steel strip (2);
   - Measuring a width $w$ and a temperature $T$ of the at least partly converted steel strip (2);
   - Determining the ferritic phase fraction $x_\alpha$ through

$$\mathrm{x}_\alpha = \frac{-w - w\,\alpha_\gamma\,(T_1 - T_0) + \mathrm{w}_1 + \mathrm{w}_1\,\alpha_\gamma(\mathrm{T} - T_0)}{w_1\left[-\alpha_\alpha(T - T_0) + \alpha_\gamma(T - T_0)\right]}.$$

8. Method according to one of claims 1 and 7, **characterised in that** the steel strip (2) is hot-rolled before, preferably immediately before, the measurement of the width $w_1$ and the temperature $T_1$.

9. Method according to one of claims 1 and 7 to 8, **characterised in that** the width $w$ and the temperature $T$ of the at least partly converted steel strip (2) are measured during or after cooling in a cooling zone (6).

10. Method according to claim 9, **characterised in that** the cooling is set as a function of the ferritic phase fraction $\mathbf{x}_\alpha$.

11. Method according to claim 11, **characterised in that** the cooling duration and/or the cooling intensity during cooling are set under open-loop control or closed-loop control.

12. Computer program product for carrying out the method according to one of the preceding claims, **characterised in that** the computer program is able to be supplied with values for the width $w_1$ and the temperature $T_1$ before the at least partial phase conversion, the width $w$ and the temperature $T$ of the steel strip after the at least partial phase conversion, and physical parameters of the steel strip, and the computer program product has a computing module for computing the ferritic phase fraction $x_\alpha$

$$\mathrm{x}_\alpha = \frac{-w - w\,x_{\alpha 1}\,\alpha_\alpha\,(T_1 - T_0) - \mathrm{w}\,\alpha_\gamma(\mathrm{T}_1 - T_0) + \mathrm{w}\,x_{\alpha 1}\alpha_\gamma(\mathrm{T}_1 - T_0) + \mathrm{w}_1 + \mathrm{w}_1\,\alpha_\gamma(\mathrm{T} - T_0)}{w_1\left[-\alpha_\alpha(T - T_0) + \alpha_\gamma(T - T_0)\right]}.$$

13. Device for determining the ferritic phase fraction $x_\alpha$ after heating or cooling of a steel strip (2), especially for carrying out the method according to one of claims 1 to 11, having

   - a first temperature measuring device (4a) for measuring $T_1$ and a first width measuring device (5a) for measuring $w_1$;
   - a second temperature measuring device (5a) for measuring $T$ and a second width measuring device (5b) for measuring $w$, wherein the first temperature measuring device (4a) and the first width measuring device (5a) are disposed before the cooling zone (6) and the second temperature measuring device (4b) and the second width measuring device (5b) are disposed after the cooling zone (6);
   - a computing unit (9) for determining the ferritic phase fraction $\mathrm{x}_\alpha = \frac{-w - w\,x_{\alpha 1}\,\alpha_\alpha\,(T_1 - T_0) - \mathrm{w}\,\alpha_\gamma(\mathrm{T}_1 - T_0) + \mathrm{w}\,x_{\alpha 1}\alpha_\gamma(\mathrm{T}_1 - T_0) + \mathrm{w}_1 + \mathrm{w}_1\,\alpha_\gamma(\mathrm{T} - T_0)}{w_1\left[-\alpha_\alpha(T - T_0) + \alpha_\gamma(T - T_0)\right]}$, wherein the computing unit (9) is connected for signalling purposes to the first temperature measuring device (4a), the first width measuring device (5a), the second temperature measuring device (4b) and the second width measuring device (5b).

14. Device according to claim 13, wherein the cooling zone (6) has at least one cooling nozzle (7) with a setting device (8), or the heating zone has at least one heating element with a setting device (8), **characterised in that** the computing unit (9) is connected for signalling purposes to the setting device (8), so that the ferritic phase fraction can be set.

15. Device according to claim 14, **characterised in that** an open-loop control device or a closed-loop control device (11) is disposed between the computing unit (9) and the setting device (8), wherein the open-loop control device or the closed-loop control device (11) is connected for signalling purposes to the computing unit (9) and the setting device (8).

## Revendications

1.  Procédé pour la détermination de la proportion de phase ferritique $x_\alpha$ après le chauffage ou le refroidissement d'une bande d'acier (2), comprenant les étapes de procédé suivantes :

    - mesure d'une largeur $w_1$ et d'une température $T_1$ de la bande d'acier (2), la bande d'acier (2) comprenant une proportion de phase ferritique $x_{\alpha 1}$ pendant les mesures ;
    - chauffage ou refroidissement de la bande d'acier (2), dans lequel dans la bande d'acier (2) se produisent lors du chauffage au moins partiellement une transformation de phase $\alpha \rightarrow \gamma$ d'un état ferritique $\alpha$ dans l'état austénitique $\gamma$, et lors du refroidissement au moins partiellement une transformation de phase de l'état austénitique $\gamma$ dans un état ferritique $\alpha$ ;
    - mesure d'une largeur $w$ et d'une température $T$ de la bande d'acier (2) au moins partiellement transformée ;
    - détermination de la proportion de phase ferritique $x_\alpha$ par la formule :

$$x_\alpha = \frac{-w - w\, x_{\alpha 1}\, \alpha_\alpha\, (T_1 - T_0) - w\, \alpha_\gamma (T_1 - T_0) + w\, x_{\alpha 1} \alpha_\gamma (T_1 - T_0) + w_1 + w_1\, \alpha_\gamma (T - T_0)}{w_1 \left[ -\alpha_\alpha (T - T_0) + \alpha_\gamma (T - T_0) \right]},$$

    dans laquelle

    $T_0$ est une température de référence, et
    $\alpha_\alpha$ et $\alpha_\gamma$ sont les coefficients de dilatation thermique linéaires de la ferrite et de l'austénite.

2.  Procédé pour la détermination de la proportion de phase ferritique $x_\alpha$ après le chauffage d'une bande d'acier (2) selon la revendication 1, **caractérisé par**

    - la mesure de la largeur $w_1$ et de la température $T_1$ de la bande d'acier (2), la bande d'acier (2) se trouvant pendant les mesures entièrement dans un état ferritique avec $x_{\alpha 1} = 1$ ;
    - chauffage de la bande d'acier (2), dans lequel dans la bande d'acier (2) se produit au moins partiellement une transformation de phase $\alpha \rightarrow \gamma$ de l'état ferritique $\alpha$ dans l'état austénitique $\gamma$ ;
    - mesure d'une largeur $w$ et d'une température $T$ de la bande d'acier (2) au moins partiellement transformée ;
    - détermination de la proportion de phase ferritique $x_\alpha$ par la formule :

$$x_\alpha = \frac{-w - w\, \alpha_\alpha\, (T_1 - T_0) + w_1 + w_1\, \alpha_\gamma (T - T_0)}{w_1 \left[ -\alpha_\alpha (T - T_0) + \alpha_\gamma (T - T_0) \right]}.$$

3.  Procédé selon l'une des revendications précédentes, **caractérisé en ce que** la bande d'acier (2) est refroidie dans une section de refroidissement avant, de préférence immédiatement avant, la mesure de la largeur $w_1$ et de la température $T_1$.

4.  Procédé selon l'une des revendications précédentes, **caractérisé en ce que** la mesure de la largeur $w$ et de la température $T$ de la bande d'acier (2) au moins partiellement transformée s'effectue pendant ou après le recuit.

5.  Procédé selon la revendication 4, **caractérisé en ce que** la durée de recuit et/ou la température de recuit lors du recuit sont ajustées en fonction de la proportion de phase ferritique $x_\alpha$.

6.  Procédé selon la revendication 5, **caractérisé en ce que** la durée de recuit et/ou la température de recuit sont ajustées en étant commandées ou régulées.

7.  Procédé pour la détermination de la proportion de phase ferritique $x_\alpha$ après le refroidissement d'une bande d'acier (2) selon la revendication 1, **caractérisé par**

- la mesure de la largeur $w_1$ et de la température $T_1$ de la bande d'acier (2), la bande d'acier (2) se trouvant pendant les mesures entièrement dans l'état austénitique avec $x_{\alpha 1} = 0$ ;
- refroidissement de la bande d'acier (2), dans lequel dans la bande d'acier (2) se produit au moins partiellement une transformation de phase de l'état austénitique $\gamma$ dans un état ferritique $\alpha$ ;
- mesure d'une largeur $w$ et d'une température $T$ de la bande d'acier (2) au moins partiellement transformée ;
- détermination de la proportion de phase ferritique $x_\alpha$ par la formule :

$$x_\alpha = \frac{-w - w\,\alpha_\gamma\,(T_1 - T_0) + w_1 + w_1\,\alpha_\gamma(T - T_0)}{w_1\left[-\alpha_\alpha(T - T_0) + \alpha_\gamma(T - T_0)\right]}.$$

8. Procédé selon l'une des revendications 1 et 7, **caractérisé en ce que** la bande d'acier (2) est laminée à chaud avant, de préférence immédiatement avant, la mesure de la largeur $w_1$ et de la température $T_1$.

9. Procédé selon l'une des revendications 1 et 7 à 8, **caractérisé en ce que** la mesure de la largeur $w$ et de la température $T$ de la bande d'acier (2) au moins partiellement transformée s'effectue pendant ou après le refroidissement dans une section de refroidissement (6).

10. Procédé selon la revendication 9, **caractérisé en ce que** le refroidissement est ajusté en fonction de la proportion de phase ferritique $x_\alpha$.

11. Procédé selon la revendication 11, **caractérisé en ce que** la durée de refroidissement et/ou l'intensité de refroidissement lors du refroidissement sont ajustées en étant commandées ou régulées.

12. Produit de programme informatique pour la mise en oeuvre du procédé selon l'une des revendications précédentes, **caractérisé en ce que** l'on peut entrer dans le programme informatique des valeurs pour la largeur $w_1$ et la température $T_1$ avant la transformation de phase au moins partielle, la largeur $w$ et la température $T$ de la bande d'acier après la transformation de phase au moins partielle, et des paramètres physiques de la bande d'acier, et le produit de programme informatique comprend un module de calcul pour le calcul de la proportion de phase ferritique $x_\alpha$

$$x_\alpha = \frac{-w - w\,x_{\alpha 1}\,\alpha_\alpha\,(T_1 - T_0) - w\,\alpha_\gamma(T_1 - T_0) + w\,x_{\alpha 1}\alpha_\gamma(T_1 - T_0) + w_1 + w_1\,\alpha_\gamma(T - T_0)}{w_1\left[-\alpha_\alpha(T - T_0) + \alpha_\gamma(T - T_0)\right]}$$

.

13. Dispositif pour la détermination de la proportion de phase ferritique $x_\alpha$ après le chauffage ou le refroidissement d'une bande d'acier (2), en particulier pour la mise en oeuvre du procédé selon l'une des revendications 1 à 11, comprenant

- un premier dispositif de mesure de température (4a) pour la mesure de $T_1$ et un premier dispositif de mesure de largeur (5a) pour la mesure de $w_1$ ;
- un deuxième dispositif de mesure de température (5a) pour la mesure de $T$ et un deuxième dispositif de mesure de largeur (5b) pour la mesure de $w$, le premier dispositif de mesure de température (4a) et le premier dispositif de mesure de largeur (5a) étant disposés avant une section de chauffage ou une section de refroidissement (6), et le deuxième dispositif de mesure de température (4b) et le deuxième dispositif de mesure de largeur (5b) étant disposés après la section de chauffage ou la section de refroidissement (6) ;
- une unité de calcul (9) pour la détermination de la proportion de phase ferritique

$$x_\alpha = \frac{-w - w\,x_{\alpha 1}\,\alpha_\alpha\,(T_1 - T_0) - w\,\alpha_\gamma(T_1 - T_0) + w\,x_{\alpha 1}\alpha_\gamma(T_1 - T_0) + w_1 + w_1\,\alpha_\gamma(T - T_0)}{w_1\left[-\alpha_\alpha(T - T_0) + \alpha_\gamma(T - T_0)\right]},$$

l'unité de calcul (9) étant reliée du point de vue signal au premier dispositif de mesure de température (4a), au premier dispositif de mesure de largeur (5a), au deuxième dispositif de mesure de température (4b) et au deuxième dispositif de mesure de largeur (5b).

14. Dispositif selon la revendication 13, dans lequel la section de refroidissement (6) comprend au moins une buse de refroidissement (7) avec un dispositif d'ajustement (8) ou la section de chauffage comprend au moins un élément de chauffage avec un dispositif d'ajustement (8), **caractérisé en ce que** l'unité de calcul (9) est reliée du point de vue signal au dispositif d'ajustement (8), de sorte que la proportion de phase ferritique puisse être ajustée.

**15.** Dispositif selon la revendication 14, **caractérisé en ce qu**'entre l'unité de calcul (9) et le dispositif d'ajustement (8) est disposé un dispositif de commande ou un dispositif de régulation (11), dans lequel le dispositif de commande ou de régulation (11) est relié du point de vue signal à l'unité de calcul (9) et au dispositif d'ajustement (8).

# Fig 1

# Fig 2

Fig 3

EP 2 992 117 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6679626 B2
- US 2008135137 A1
- WO 2004042480 A1